# EUROPÄISCHE PATENTSCHRIFT

(11) **EP 0 671 293 B1**
(45) Veröffentlichungstag und Bekanntmachung des Hinweises auf die Patenterteilung: **16.04.1997**
(21) Anmeldenummer: 95102227.6
(22) Anmeldetag: 17.02.1995
(51) Int. Cl.: B60N 2/36

(54) **Kraftfahrzeug-Hintersitz mit einer geteilten Rückenlehne**
Motor vehicle rear seat with a split backrest
Siège arrière de véhicule automobile à dossier en deux parties

(30) Priorität: 24.02.1994 DE 4405959
(43) Veröffentlichungstag der Anmeldung: 13.09.1995
(73) Patentinhaber: ADAM OPEL AG, 65423 Rüsselsheim (DE)
(72) Erfinder: Leuchtmann, Andrew, Dipl.-Ing., D-55545 Bad Kreuznach (DE); Gimbel, Hans Peter, Dipl.-Ing., D-65468 Trebur (DE)
(74) Vertreter: Kümpfel, Heinz, Dipl.-Ing.

(56) Entgegenhaltungen:
- EP-A- 0 125 978
- EP-A- 0 474 368
- DE-A- 3 211 363
- FR-A- 2 532 595

## Beschreibung

Die Erfindung betrifft einen Kraftfahrzeug-Hintersitz mit einer geteilten Rückenlehne, deren einzelne Rückenlehnenteile zur Schwenkung um zumindest eine horizontale und quer zur Fahrtrichtung verlaufende Schwenkachse über ein inneres im Bereich der Teilungsebene der Rückenlehne und ein äußeres im Bereich der Seitenwand des Kraftfahrzeuges angeordnetes Scharnier an der Karosserie angelenkt sind, wobei jedes Scharnier ein rückenlehnenseitiges und ein karosserieseitiges Beschlagteil aufweist.

Derartige Kraftfahrzeug-Hintersitze (siehe z.B. EP-A-0 474 368) werden insbesondere bei Personen- oder Kombifahrzeugen verwendet, die hinter der Rückenlehne einen Laderaum aufweisen, der durch Umklappen der Rückenlehne oder deren einzelnen Rückenlehnenteile vergrößert werden kann. Dabei ist es vorteilhaft, wenn die Rückenlehne eine möglichst weit vorne - bezogen auf die Fahrtrichtung - angeordnete Schwenkachse aufweist. Bei Kraftfahrzeug-Hintersitzen mit einer durchgehenden Rückenlehne ist eine derartige Anordnung der Schwenkachse einfach zu verwirklichen, da die äußeren, die Lage der Schwenkachse bestimmenden Scharniere außerhalb der Sitzfläche im Bereich der Seitenwand angeordnet sind.

Bei einer geteilten Rückenlehne hat es sich jedoch als problematisch erwiesen, die Schwenkachse der Rückenlehne nach vorne zu verlegen, da die inneren Scharniere zum Umklappen der einzelnen Rückenlehnenteile an der Teilungsebene im Bereich der Polsterauflage angeordnet werden müssen. Im Falle eines Frontal- oder Heckaufpralls können durch Verlagerung des im Laderaum befindlichen Ladegutes nach vorne im Bereich dieser Scharniere Deformationen entstehen. Es besteht dabei die Gefahr, daß Teile der Scharniere die Polsterauflage durchdringen und die Fahrzeuginsassen verletzen können.

Um dieses Verletzungsrisiko zu reduzieren muß am Hintersitz der Bereich, in dem diese Scharniere angeordnet sind, mit einer verstärkten sich in den Innenraum wölbenden Polsterung abgedeckt werden. Dadurch werden aber das Design des Hintersitzes und der Sitzkomfort in diesem Bereich beeinträchtigt, so daß ein Insasse in diesem Bereich, in dem sich meistens ein dritter bzw. ein mittlerer Sitz befindet, nur unbequem sitzen kann.

Es ist Aufgabe der Erfindung, einen Kraftfahrzeug-Hintersitz der im Oberbegriff des Patentanspruches 1 genannten Gattung zu schaffen, bei dem die Sicherheit für die Insassen auch bei einer weit vorne - bezogen auf die Fahrtrichtung - im Bereich der Polsterauflage angeordneten Schwenkachse der Rückenlehne gewährleistet ist und somit keine Gefahr durch in den Sitzraum eindringende Teile der Scharniere bei einem Heck- oder Frontalaufprall besteht.

Gelöst wird diese Aufgabe dadurch, daß die Beschlagteile am äußeren Scharnier mittels eines ortsfest an der Karosserie angeordneten Drehgelenkes und die Beschlagteile am inneren Scharnier im Abstand hinter der Schwenkachse - bezogen auf die Fahrtrichtung - angeordnet und mittels eines ausziehbaren Mechanismus miteinander verbunden sind, so daß sich das rückenlehnenseitige Beschlagteil bei der Verschwenkung des Rückenlehnenteils um eine kreisförmige Bahn um die Schwenkachse bewegt.

Durch diese Ausbildung ist es möglich, die Schwenkachse der Rückenlehne bzw. der Rückenlehnenteile relativ weit vorne im Bereich der Polsterauflage des Sitzkissens oder der Rückenlehne anzuordnen, wobei die Lage dieser Schwenkachse durch die beiden äußeren ortsfesten, außerhalb des Sitzbereiches an der Seitenwand angeordneten Scharniere bestimmt wird. Ortsfeste Anordnung des Scharniers bedeutet dabei, daß die Lage der Schwenkachse nur durch das karosserieseitige Beschlagteil bestimmt wird und das rückenlehnenseitige Beschlagteil sich nur um diese Schwenkachse drehen kann.

Da die inneren Scharniere mit Abstand hinter der Schwenkachse angeordnet sind, ist zwischen den Scharnieren und der Polsterauflage ausreichend Sicherheitsraum vorhanden, um das Eindringen von Teilen der Scharniere in den Sitzraum bei einem Unfall zu vermeiden. Weiterhin ermöglicht diese Ausbildung der inneren Scharniere eine freie Gestaltung der Sitzfläche, da aus Sicherheitsgründen keine zusätzliche Polsterung im Bereich der inneren Scharniere notwendig ist.

Die inneren Scharniere können in einfacher Weise im Abstand hinter der Schwenkachse des Rückenlehnenteils angeordnet sein, wenn der ausziehbare Mechanismus als ein scherenartiger Mehrgelenk-Mechanismus ausgebildet ist, bei dem das Scherenteil aus zwei etwa gleichlangen Hebelteilen besteht, die über ein in der Mitte angeordnetes Drehgelenk miteinander verbunden sind. Als Drehgelenk kann dabei ein übliches Niet- oder Stiftgelenk verwendet werden.

Zur drehbaren Verbindung mit dem karosserieseitigen Beschlagteil weist das Scherenteil auf der zum Beschlagteil zugewandten Seite an beiden Enden der Hebelteile jeweils ein Drehgelenk auf, wovon ein Drehgelenk zur direkten Verbindung mit dem Beschlagteil und das andere Drehgelenk zur Verbindung mit einem Ende eines Drehhebels vorgesehen ist, wobei der Drehhebel mit seinem anderen Ende über ein weiteres Drehgelenk ebenfalls mit dem Beschlagteil verbunden ist.

Zur drehbaren Verbindung mit dem rückenlehnenseitigen Beschlagteil weist das Scherenteil auf der zum rückenlehnenseitigen Beschlagteil zugewandten Seite an beiden Enden der Hebelteile jeweils ein Drehgelenk auf, wovon ein Drehgelenk zur Verbindung mit dem Beschlagteil und das andere Drehgelenk zur Verbindung mit einem Ende eines Zwischenhebels vorgesehen ist, wobei der Zwischenhebel mit seinem anderen Ende über ein weiteres Drehgelenk ebenfalls mit dem Beschlagteil verbunden ist.

Erfindungsgemäß ist es vorgesehen, daß die Abstände zwischen jeweils zwei Drehgelenken an beiden Beschlagteilen, an den Hebelteilen, am Drehhebel und am Zwischenhebel gleich sind. Weiterhin ist vorteilhafterweise vorgesehen, daß die Achsen von mindestens zwei karosserieseitigen Drehgelenken (die Achse des Hebelteils und die des Drehhebels) des ausziehbaren Mechanismus und die Schwenkachse in einer Ebene liegen, wobei die Achse des Drehgelenkes des Hebelteils in der Mitte zwischen der Schwenkachse und der Achse des Drehgelenkes des Drehhebels angeordnet ist.

Durch diese Ausbildung des inneren Scharniers kann das rückenlehnenseitige Beschlagteil bei der Drehbewegung eine etwa kreisförmige Bahn um die Schwenkachse beschreiben und dadurch eine taumelfreie Verschwenkung des Rückenlehnenteils ermöglichen.

Zur Erhöhung der Sicherheit der Insassen trägt besonders bei, daß jedes innere Scharnier in Bezug auf die Beweglichkeit der beiden Beschlagteile zueinander mittels einer Verriegelungsvorrichtung verriegelbar ist. Diese Verriegelungsvorrichtung ist gemeinsam mit einer an der Seitenwand des Kraftfahrzeuges angreifenden Verriegelungsvorrichtung ver- und entriegelbar. Bei der an der Seitenwand des Kraftfahrzeuges angreifenden Verriegelungsvorrichtung kann es sich um ein bekanntes Verriegelungsschloß handeln, das bei der Verriegelung des Rückenlehnenteils zum Beispiel mit einem an der Seitenwand des Kraftfahrzeuges angebrachten Verriegelungsbolzen zusammenwirkt.

Durch die gemeinsame Verriegelung an der Seitenwand und am inneren Scharnier erhöht sich die Stabilität des jeweiligen Rückenlehnenteils unabhängig von der Gebrauchsstellung des anderen Rückenlehnenteils. Dabei bewirkt die Verriegelung am inneren Scharnier, daß bei der Belastung des Rückenlehnenteils infolge eines Unfalls ein Widerstandsmoment um die Schwenkachse des Rückenlehnenteils entsteht, welches gegen die auf das Rückenlehnenteil einwirkenden Kräfte gerichtet ist. Auf diese Weise wird das Verletzungsrisiko für Fahrzeuginsassen reduziert.

Zur gemeinsamen Ver- und Entriegelung ist erfindungsgemäß vorgesehen, daß zwischen den beiden Verriegelungsvorrichtungen eines Rückenlehnenteils eine Wirkverbindung besteht, die bei Verriegelung bzw. Entriegelung einer Verriegelungsvorrichtung, beispielsweise der an der Seitenwand angreifenden Verriegelungsvorrichtung, die Verriegelung bzw. Entriegelung der anderen Verriegelungsvorrichtung, beispielsweise der am inneren Scharnier, auslöst. Die Wirkverbindung kann mechanisch, zum Beispiel als ein Gestänge, oder elektrisch ausgebildet sein. Im letzteren Falle können eine oder auch beide Verriegelungsvorrichtungen mit Einrichtungen zur elektrischen Betätigung, wie zum Beispiel elektrische Stellglieder, ausgerüstet sein, so daß beim Ver- bzw. Entriegeln nur ein Auslösesignal von einer Verriegelungsvorrichtung zu der anderen übermittelt werden muß.

Besonders einfach können beide Verriegelungsvorrichtungen gemeinsam betätigt werden, wenn die Wirkverbindung als Seilzug ausgebildet ist, der einerseits an einem federbelasteten Schloßriegel des Verriegelungsschlosses der an der Seitenwand angreifenden Verriegelungsvorrichtung und andererseits an einem beweglich gelagerten Verriegelungshebel der Verriegelungsvorrichtung am inneren Scharnier lösbar befestigt ist. Dazu sind am Schloßriegel und am Verriegelungshebel an sich bekannte Aufnahmen zur lösbaren Verbindung mit den entsprechenden Seilzugenden vorgesehen. Durch seine Flexibilität eignet sich der Seilzug, der auch als Bowdenzug ausgebildet werden kann, besonders gut zur Verlegung und Befestigung in Hohlräumen des Rückenlehnenteils oder der Karosserie.

Beim Zurückschwenken des jeweiligen Rückenlehnenteils in die etwa vertikale Gebrauchsstellung verriegelt sich selbsttätig das Verriegelungsschloß und verankert somit das Rückenlehnenteil an der Seitenwand. Dabei wird die Bewegung des Schloßriegels, der durch eine am Verriegelungsschloß angeordnete Feder vorgespannt ist, aus einer verrasteten Lösestellung in die Verriegelungsstellung über den Seilzug auf den Verriegelungshebel der Verriegelungsvorrichtung am inneren Scharnier übertragen, so daß auch das innere Scharnier verriegelt wird.

Das innere Scharnier weist wie üblich zwei Beschlagteile auf, ein rückenlehnenseitiges und ein karosserieseitiges. Erfindungsgemäß ist am karosserieseitigen Beschlagteil eine Öse vorgesehen, die in der etwa vertikalen Gebrauchsstellung des Rückenlehnenteils eine Öffnung am rückenlehnenseitigen Beschlagteil durchsetzt. Da der Verriegelungshebel in vorteilhafter Weise als ein zweiarmiger Schwenkhebel mit einem zwischen den beiden Armen angeordneten Drehgelenk ausgebildet ist, kann einer der beiden Schwenkarme bei der Betätigung in die Öse eingreifen und auf diese Weise das rückenlehnenseitige Beschlagteil am karosserieseitigen Beschlagteil festhalten. Dadurch kann sich auch das Rückenlehnenteil nicht mehr um die Schwenkachse drehen.

Die Entriegelung der beiden Verriegelungsvorrichtungen erfolgt auf eine besonders einfache Art und Weise durch Betätigung eines am Rückenlehnenteil angeordneten Entriegelungsknopfes. Dabei wird der Schloßriegel gegen die Kraft der Feder in Bewegung gesetzt, bis dieser schließlich in der Lösestellung verrastet. Ähnlich wie beim Verriegelungsvorgang wird auch hier die Bewegung des Schloßriegels mittels des Seilzuges auf den Verriegelungshebel am inneren Scharnier übertragen und somit dieses zum Öffnen veranlassen.

Der Verriegelungshebel, der Schloßriegel und die Wirkverbindung zwischen den beiden Verriegelungsvorrichtungen sind erfindungsgemäß am Rückenlehnenteil angeordnet. Diese Ausführung ist besonders vorteilhaft, weil das Rückenlehnenteil zusammen mit allen dazugehörigen, für den Ver- und Entriegelungsvorgang notwendigen Komponenten vormontiert und als Baueinheit in das Kraftfahrzeug eingebaut werden kann. Das Rückenlehnenteil kann auch komplett fertiggestellt in das Fahrzeug eingebaut werden.

Gemäß einer anderen, zeichnerisch nicht dargestellten Ausführung können der Verriegelungshebel, der Schloßriegel und die Wirkverbindung an der Karosserie angeordnet sein. Diese Anordnung eignet sich insbesondere für Kraftfahrzeuge, bei denen das Verriegelungsschloß für die Rückenlehne aus konstruktiven Gegebenheiten oder anderen Gründen in der Karosserie-Seitenwand und der entsprechende mit dem Verriegelungsschloß zusammenwirkende Verriegelungsbolzen am Rückenlehnenteil angeordnet sind. Bei dieser Ausführung können auch alle für den Ver- und Entriegelungsvorgang notwendigen Komponenten, wie z. B. Seilzug oder Bolzen zur Verriegelung des inneren Scharniers, in der Karosserie verlegt oder vormontiert werden. Dadurch wird das Rückenlehnenteil gewichtsmäßig entlastet und es entsteht mehr Freiraum bei der Gestaltung des Rückenlehnenteils.

Die Erfindung läßt zahlreiche Ausführungsformen zu. Zur weiteren Verdeutlichung ihres Grundprinzips ist eine davon in der Zeichnung dargestellt und nachfolgend beschrieben. Die Zeichnung zeigt in
- Fig. 1: eine perspektivische Ansicht eines erfindungsgemäßen Kraftfahrzeug-Hintersitzes mit einer geteilten Rückenlehne, wobei ein Rückenlehnenteil nach vorn geklappt ist;
- Fig. 2: erfindungsgemäße innere Scharniere nach Fig. 1, in perspektivischer Darstellung, wobei ein Scharnier in verriegelter Stellung und das andere Scharnier in einer einem umgeklappten Rückenlehnenteil entsprechenden Stellung gezeigt ist;
- Fig. 3: eine Seitenansicht auf die inneren und äußeren Scharniere nach Fig. 1, wobei die Scharniere zur Verdeutlichung zum Teil durchsichtig und in dünnen Linien gezeichnet sind;
- Fig. 4: teilweise schematisch dargestellte Verriegelungsvorrichtungen nach Fig. 1, die mittels eines Seilzuges miteinander verbunden sind;
- Fig. 5: eine Schnittdarstellung der Verriegelungsvorrichtung entlang der Schnittführung I in Fig. 4;
- Fig. 6: eine Schnittdarstellung der Verriegelungsvorrichtung entlang der Schnittführung II in Fig. 4.

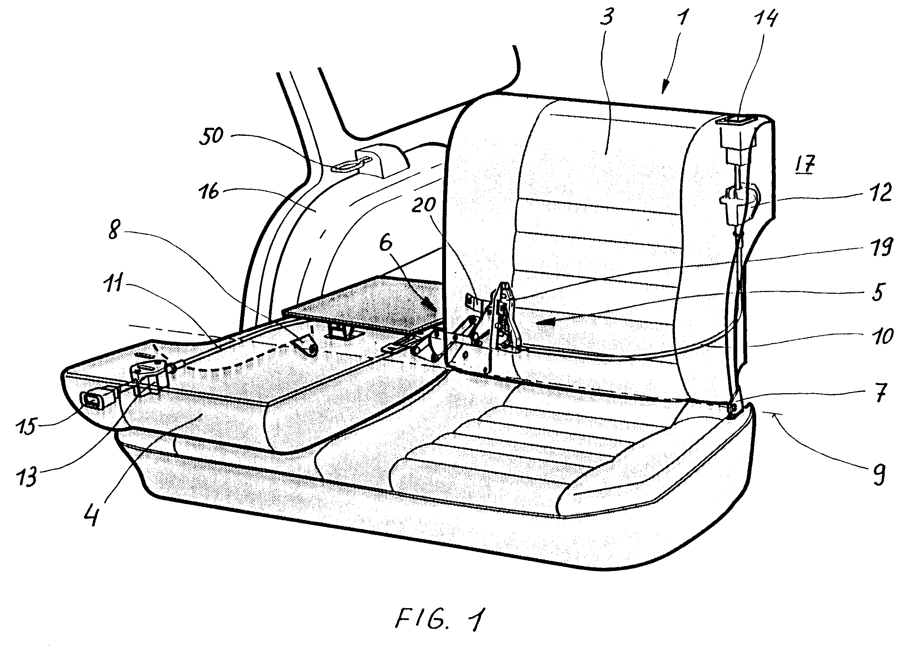

Bei dem in Fig. 1 dargestellten Kraftfahrzeug-Hintersitz 1 ist die Rückenlehne außermittig geteilt, wobei sich die einzelnen Rückenlehnenteile 3 bzw. 4 beim Umklappen um eine Schwenkachse 9 drehen. Zu diesem Zwecke weist jedes Rückenlehnenteil 3 bzw. 4 jeweils ein äußeres im Bereich der Seitenwand 16 bzw. 17 angeordnetes Scharnier 7 bzw. 8 und jeweils ein inneres im Bereich der Teilungsebene der Rückenlehne angeordnetes Scharnier 5 bzw. 6 auf. Die Scharniere 5, 6, 7, 8 sind derart ausgebildet und an der Karosserie 2 angeordnet, daß die Schwenkachse 9 als eine durchgehende Linie horizontal und quer zur Fahrtrichtung verläuft. In Fig. 1 ist das Rückenlehnenteil 4 entriegelt und umgeklappt und das Rückenlehnenteil 3 in der etwa vertikalen Gebrauchsstellung verriegelt dargestellt, wobei die in den Rückenlehnenteilen 3, 4 integrierten oder hinter den Rückenlehnenteilen 3, 4 angeordneten Teile zur Verdeutlichung der Erfindung sichtbar gezeichnet sind.

Zur Verriegelung des Rückenlehnenteils 3 ist im Bereich der nicht dargestellten Seitenwand 17 eine Verriegelungsvorrichtung 12 vorgesehen, die mittels eines Seilzuges 10 mit einer weiteren Verriegelungsvorrichtung 19 am inneren Scharnier 5 verbunden ist. Dadurch können beide Verriegelungsvorrichtungen 12, 19 gemeinsam verriegelt bzw. entriegelt werden, wobei die Verriegelung selbsttätig durch Zurückschwenken des Rückenlehnenteils 3 in die etwa vertikale Gebrauchsstellung und die Entriegelung durch Betätigung eines an der Oberseite des Rückenlehnenteils 3 angeordneten Entriegelungsknopfes 14 erfolgt.

Die Verriegelung bzw. Entriegelung des Rückenlehnenteils 4 erfolgt in ähnlicher Weise wie bei dem Rückenlehnenteil 3. Zur Verdeutlichung der selbsttätigen Verriegelung ist eine im Bereich der Seitenwand 16 mit der Karosserie 2 fest verbundene Verriegelungslasche 50 dargestellt, die beim Zurückschwenken des Rückenlehnenteils 4 mit der Verriegelungsvorrichtung 13 zusammenwirkt.

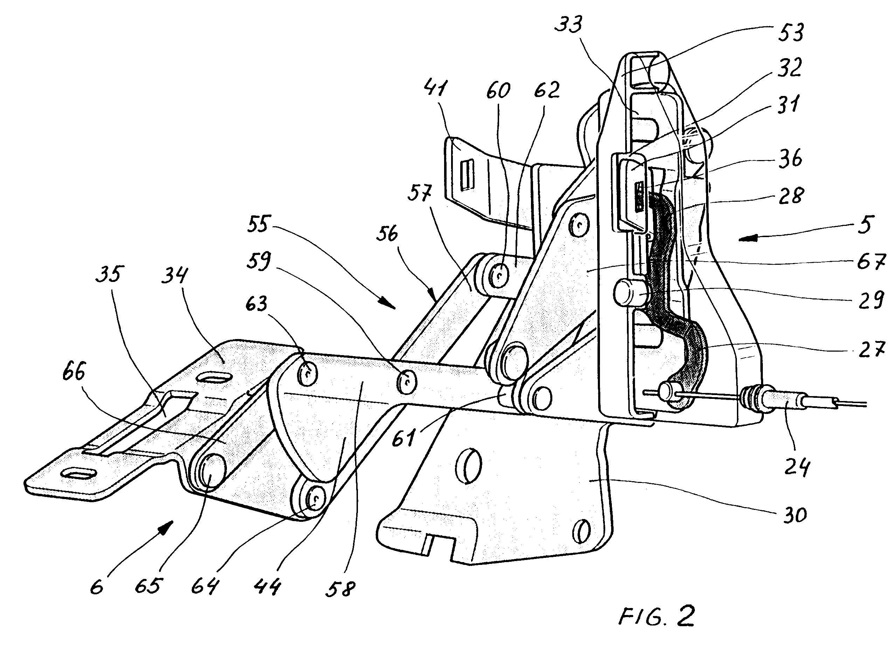

Die Fig. 2 zeigt in perspektivischer Darstellung die erfindungsgemäßen inneren Scharniere 5, 6 nach Fig. 1 ohne umliegende Teile, wobei ein Scharnier 5 in verriegelter Stellung und das andere Scharnier 6 in einer dem umgeklappten Rückenlehnenteil 4 entsprechenden Stellung gezeigt ist. Da alle Einzelteile der inneren Scharniere 5, 6 gegenüber der Teilungsebene der Rückenlehne spiegelbildlich ausgeführt sind, wird nachfolgend nur ein inneres Scharnier 5 bzw. 6 beschrieben.

So weist das innere Scharnier 6 im wesentlichen ein karosserieseitiges Beschlagteil 30, ein rückenlehnenseitiges Beschlagteil 34 sowie einen ausziehbaren Mechanismus 55 auf, wobei das karosserieseitige Beschlagteil 30 derart ausgebildet ist, daß es gleichzeitig auch als karosserieseitiges Beschlagteil für das innere Scharnier 5 verwendet ist. Der die beiden Beschlagteile 30, 34 verbindende ausziehbare Mechanismus 55 ist als scherenartiger Mehrgelenk-Mechanismus ausgebildet, bei dem das Scherenteil 56 aus zwei gleichlangen Hebelteilen 57, 58 besteht, die über ein Drehgelenk 59 miteinander verbunden sind. Das Hebelteil 58 weist dabei einen flachen Ansatz 44 auf, der in dieser Stellung des Scherenteils 56 aus Sicherheitsgründen eine nicht gezeigte Öffnung zwischen dem Beschlagteil 34 und den Hebelteilen 57, 58 verdeckt.

Zur drehbaren Verbindung mit dem karosserieseitigen Beschlagteil 30 weist das Scherenteil 56 auf der zum Beschlagteil 30 zugewandten Seite an beiden Enden der Hebelteile 57, 58 jeweils ein Drehgelenk 60, 61 auf, wovon ein Drehgelenk 61 zur direkten Verbindung mit dem Beschlagteil und das andere Drehgelenk 60 zur Verbindung mit einem Ende eines Drehhebels 62 vorgesehen ist, wobei der Drehhebel 62 mit seinem anderen Ende über ein weiteres Drehgelenk 71 ebenfalls mit dem Beschlagteil 30 verbunden ist.

Zur drehbaren Verbindung mit dem rückenlehnenseitigen Beschlagteil 34 weist das Scherenteil 56 auf der zum rückenlehnenseitigen Beschlagteil 34 zugewandten Seite an beiden Enden der Hebelteile 57, 58 jeweils ein Drehgelenk 63, 64 auf, wovon ein Drehgelenk 64 zur Verbindung mit dem rückenlehnenseitigen Beschlagteil 34 und das andere Drehgelenk 63 zur Verbindung mit einem Ende eines Zwischenhebels 66 vorgesehen ist, wobei der Zwischenhebel 66 mit seinem anderen Ende über ein weiteres Drehgelenk 65 ebenfalls mit dem rückenlehnenseitigen Beschlagteil 34 verbunden ist.

Zur Verriegelung des inneren Scharniers 6 ist am karosserieseitigen Beschlagteil 30 eine Öse 41 vorgesehen, die beim Zurückschwenken des Rückenlehnenteils 4 in die etwa vertikale Gebrauchsstellung eine Öffnung 35 am rückenlehnenseitigen Beschlagteil 34 durchsetzt. Am Beispiel des verriegelten Scharniers 5 ist deutlich zu sehen, daß in dieser Stellung der Schwenkarm 28 des Verriegelungshebels 26 in eine in der Öse 31 vorgesehene Öffnung 36 eingreift und somit das innere Scharnier 5 verriegelt. Die Verriegelung des inneren Scharniers 6 erfolgt in gleicher Weise.

Wie weiterhin aus der Fig. 2 ersichtlich, ist der Verriegelungshebel 26 mittels des Drehgelenkes 29 am rückenlehnenseitigen Beschlagteil 33 schwenkbar gelagert. Der Schwenkarm 27 des Verriegelungshebels 26 ist dabei lösbar mit dem Ende 24 des Seilzuges 10 verbunden. Bei der Verriegelung wird dieser Schwenkarm 27 mittels dieses Seilzuges 10 betätigt.

Zur weiteren Vereinfachung der Konstruktion der erfindungsgemäßen Scharniere 5, 6 können die am karosserieseitigen Beschlagteil 30 angeordneten Drehgelenke als gleichzeitig für beide ausziehbare Mechanismen 55, 67 wirkende Drehgelenke ausgebildet sein. Dies betrifft insbesondere die drehbare Lagerung des Hebelteils 58 und des Drehhebels 62 an den karosserieseitigen Scharnieren 5, 6.

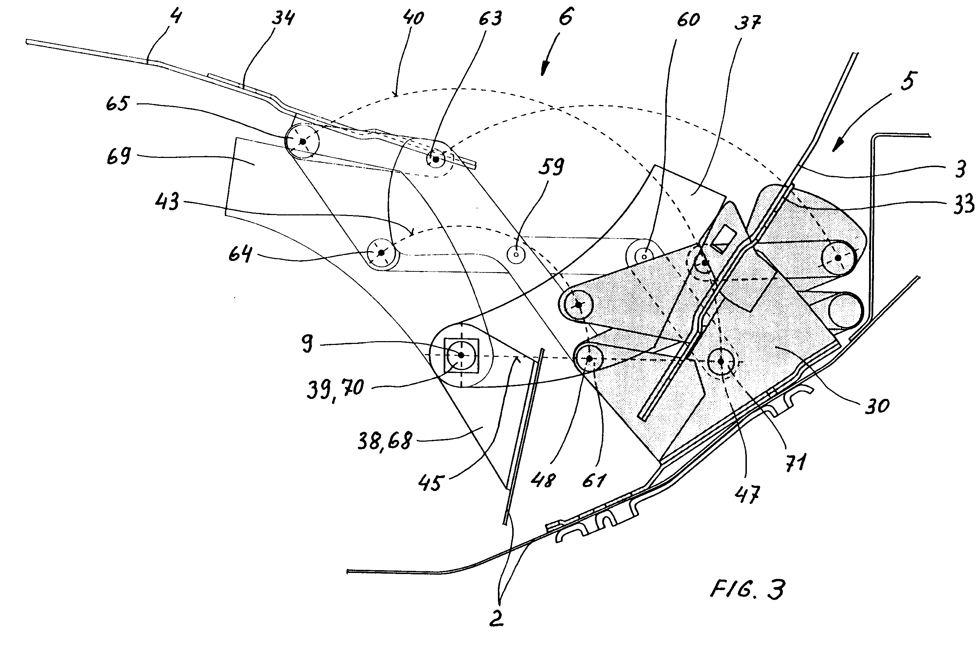

Die Fig. 3 zeigt eine Seitenansicht auf die inneren 5, 6 und äußeren 7, 8 Scharniere gemäß Fig. 1, jedoch ohne Verriegelungsvorrichtungen 19, 20, wobei das innere Scharnier 6 und das äußere Scharnier 8 des Rückenlehnenteils 4 in dünnen Linien dargestellt sind. Das äußere Scharnier 8 weist ein karosserieseitiges Beschlagteil 68 und ein rückenlehnenseitiges Beschlagteil 69 auf, die mittels eines Drehgelenkes 70 miteinander verbunden sind. Das äußere Scharnier 7 des Rückenlehnenteils 3 besteht aus einem karosserieseitigen Beschlagteil 38 und einem rückenlehnenseitigen Beschlagteil 37, die mittels eines Drehgelenkes 39 miteinander verbunden sind. Die karosserieseitigen Beschlagteile 30, 38, 68 sind entsprechend mit der Karosserie 2 und die rückenlehnenseitigen Beschlagteile 33, 34, 37, 69 sind entsprechend mit einer Tragstruktur der Rückenlehnenteile 3, 4 fest verbunden.

In Fig. 3 ist weiterhin zu sehen, daß die Achsen 47, 48 der karosserieseitigen Drehgelenke 61, 71 des ausziehbaren Mechanismus 55 und die Schwenkachse 9 in einer Ebene 45 liegen, wobei die Achse 61 in der Mitte zwischen der Schwenkachse 9 und der Achse 47 angeordnet ist. Dabei entspricht der Abstand zwischen der Schwenkachse 9 und der Achse 48 bzw. dieser Achse 48 und der Achse 47 des Drehgelenkes 71 dem Abstand zwischen jeweils zwei Drehgelenken an beiden Beschlagteilen 30, 34, an den Hebelteilen 57, 58, am Drehhebel 62 und am Zwischenhebel 66.

Diese Ausbildung trägt wesentlich dazu bei, daß sich das rückenlehnenseitige Beschlagteil 34 und somit auch das Rückenlehnenteil 4 bei der Verschwenkung um eine kreisförmige Bahn 40, 43 um die Schwenkachse 9 bewegt.

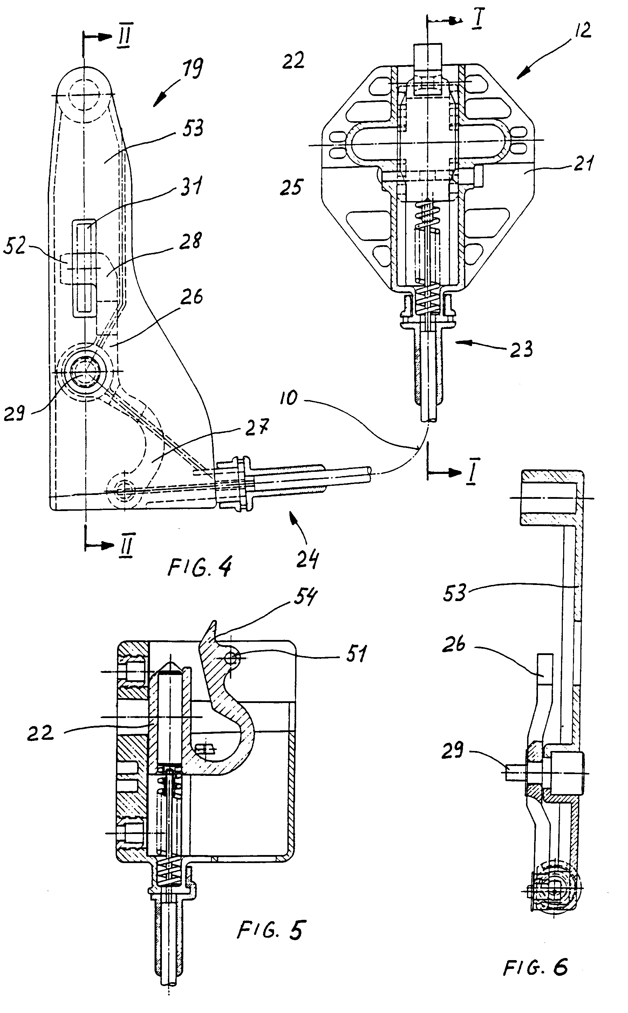

Die kinematischen Zusammenhänge bei der gemeinsamen Betätigung der Verriegelungsvorrichtungen 12 und 19 bzw. 13 und 20 sind in der Fig. 4 dargestellt. Da die kinematischen Zusammenhänge für die Verriegelungsvorrichtungen 12, 19 und 13, 20 der beiden Rückenlehnenteile 3, 4 gleich sind, werden nachfolgend nur die kinematischen Zusammenhänge am Beispiel des in Fig. 1 gezeigten verriegelten Rückenlehnenteils 3 erläutert.

Wie in der Fig. 4 dargestellt, weist die an der Seitenwand 17 angreifende Verriegelungsvorrichtung 12 ein Verriegelungsschloß 21 auf, in dem ein Schloßriegel 22 verrastbar geführt ist, wobei eine am Verriegelungsschloß 21 angeordnete Feder 25 den Schloßriegel 22 in die gezeigte Verriegelungsstellung 2 vorspannt. Wie insbesondere aus der Fig. 5 ersichtlich, weist der Schloßriegel 22 einen federnden und zur Oberseite 2 hin gerichteten Rastschenkel 54 auf, der mit einer Bohrung 51 zur Verbindung mit einem nicht dargestellten Entriegelungsknopf 14 versehen ist. Die Verriegelungsvorrichtung 12 kann je nach Ausführungsform der Erfindung am Rückenlehnenteil 3 oder an der Karosserie 2 angeordnet sein.

Zur Verbindung der beiden Verriegelungsvorrichtungen 12 und 19 ist ein Seilzug 10 vorgesehen. Der Seilzug 10 ist mit einem Ende 23 lösbar mit dem Schloßriegel 22 und mit dem anderen Ende 24 lösbar mit einem Schwenkarm 27 eines Verriegelungshebels 26 verbunden. Der andere Schwenkarm 28 ist mit einer Abkröpfung 52 versehen, die im verriegelten Zustand in eine Öse 31 eingreift. Die Öse 31 ist dabei zum besseren Verständnis in dünnen strichpunktierten Linien angedeutet. Der Verriegelungshebel 26 ist, wie in der Fig. 6 verdeutlicht, mittels eines Drehgelenkes 29 schwenkbar an einem Halter 53 gelagert, der je nach Ausführungsform der Erfindung am inneren Scharnier, am Rückenlehnenteil 3 oder an der Karosserie 2 angeordnet werden kann.

## Patentansprüche

1. Kraftfahrzeug-Hintersitz mit einer geteilten Rückenlehne, deren einzelne Rückenlehnenteile (3, 4) zur Schwenkung um zumindest eine horizontale und quer zur Fahrtrichtung verlaufende Schwenkachse (9) über ein inneres (5; 6) im Bereich der Teilungsebene der Rückenlehne und ein äußeres (7; 8) im Bereich der Seitenwand des Kraftfahrzeuges angeordnetes Scharnier an der Karosserie angelenkt sind, wobei jedes Scharnier (5 - 8) ein rückenlehnenseitiges und ein karosserieseitiges Beschlagteil aufweist, **dadurch gekennzeichnet**, daß die Beschlagteile (37, 38; 68, 69) am äußeren Scharnier (7;8) mittels eines ortsfest an der Karosserie (2) angeordneten Drehgelenkes (39;70) und die Beschlagteile (30, 33; 30, 34) am inneren Scharnier (5;6) im Abstand hinter der Schwenkachse (9) - bezogen auf die Fahrtrichtung - angeordnet und mittels eines ausziehbaren Mechanismus (55; 67) miteinander verbunden sind, so daß sich das rückenlehnenseitige Beschlagteil (33; 34) bei der Verschwenkung des Rückenlehnenteils (3; 4) um eine kreisförmige Bahn (40, 43) um die Schwenkachse (9) bewegt.

2. Kraftfahrzeug-Hintersitz nach Anspruch 1, **dadurch gekennzeichnet**, daß der ausziehbare Mechanismus (55; 67) als ein scherenartiger Mehrgelenk-Mechanismus ausgebildet ist, bei dem das Scherenteil (56) aus zwei etwa gleichlangen Hebelteilen (57, 58) besteht, die über ein in der Mitte angeordnetes Drehgelenk (59) miteinander verbunden sind.

3. Kraftfahrzeug-Hintersitz nach Anspruch 1 oder 2, **dadurch gekennzeichnet**, daß am Scherenteil (56) auf der zum karosserieseitigen Beschlagteil (30) zugewandten Seite an beiden Enden der Hebelteile (57, 58) jeweils ein Drehgelenk (60, 61) angeordnet ist, wovon ein Drehgelenk (61) zur Verbindung mit dem karosserieseitigen Beschlagteil (30) und das andere Drehgelenk (60) zur Verbindung mit einem Ende eines Drehhebels (62) vorgesehen ist, wobei der Drehhebel (62) mit seinem anderen Ende über ein weiteres Drehgelenk (71) ebenfalls mit dem karosserieseitigen Beschlagteil (30) verbunden ist.

4. Kraftfahrzeug-Hintersitz nach einem der Ansprüche 1 bis 3, **dadurch gekennzeichnet**, daß am Scherenteil (56) auf der zum rückenlehnenseitigen Beschlagteil (33, 34) zugewandten Seite an beiden Enden der Hebelteile (57, 58) jeweils ein Drehgelenk (63, 64) angeordnet ist, wovon ein Drehgelenk (64) zur Verbindung mit dem rückenlehnenseitigen Beschlagteil (33, 34) und das andere Drehgelenk (63) zur Verbindung mit einem Ende eines Zwischenhebels (66) vorgesehen ist, wobei der Zwischenhebel (66) mit seinem anderen Ende über ein weiteres Drehgelenk (65) ebenfalls mit dem rückenlehnenseitigen Beschlagteil (33, 34) verbunden ist.

5. Kraftfahrzeug-Hintersitz nach einem der Ansprüche 1 bis 4, **dadurch gekennzeichnet**, daß die Abstände zwischen jeweils zwei Drehgelenken an beiden Beschlagteilen (30, 33; 30, 34), an den Hebelteilen (57, 58), am Drehhebel (62) und am Zwischenhebel (66) gleich sind.

6. Kraftfahrzeug-Hintersitz nach einem der Ansprüche 1 bis 5, **dadurch gekennzeichnet**, daß die Achsen (47, 48) von mindestens zwei karosserieseitigen Drehgelenken (61, 71) des ausziehbaren Mechanismus (56; 67) und die Schwenkachse (9) in einer Ebene (45) liegen.

7. Kraftfahrzeug-Hintersitz nach einem der Ansprüche 1 bis 6, **dadurch gekennzeichnet**, daß die Achse (48) des karosserieseitigen Drehgelenkes (61) des Hebelteils (58) in der Mitte zwischen der Schwenkachse (9) und der Achse (47) des karosserieseitigen Drehgelenkes (71) des Drehhebels (62) angeordnet ist.

8. Kraftfahrzeug-Hintersitz nach einem der Ansprüche 1 bis 7, **dadurch gekennzeichnet**, daß jedes innere Scharnier (5; 6) in Bezug auf die Beweglichkeit der beiden Beschlagteile (30, 33; 30, 34) zueinander mittels einer Verriegelungsvorrichtung (19; 20) verriegelbar ist.

9. Kraftfahrzeug-Hintersitz nach Anspruche 8, **dadurch gekennzeichnet**, daß die Verriegelungsvorrichtung (19; 20) gemeinsam mit einer an der Seitenwand (16; 17) des Kraftfahrzeuges angreifenden Verriegelungsvorrichtung (12; 13) ver- und entriegelbar ist.

10. Kraftfahrzeug-Hintersitz nach Anspruch 8 oder 9, **dadurch gekennzeichnet**, daß zur gemeinsamen Ver- und Entriegelung zwischen beiden Verriegelungsvorrichtungen (12, 19; 13, 20), eines Rückenlehnenteils (3; 4) eine Wirkverbindung besteht.

11. Kraftfahrzeug-Hintersitz nach Anspruch 10, **dadurch gekennzeichnet**, daß die Wirkverbindung als eine elektrische Verbindung ausgebildet ist.

12. Kraftfahrzeug-Hintersitz nach Anspruch 10, **dadurch gekennzeichnet**, daß die Wirkverbindung als Seilzug (10; 11) ausgebildet ist.

13. Kraftfahrzeug-Hintersitz nach einem der Ansprüche 8 bis 11, **dadurch gekennzeichnet**, daß die Verriegelungsvorrichtungen (19; 20) durch Zurückschwenken des Rückenlehnenteils (3; 4) in die etwa vertikale Gebrauchsstellung selbsttätig verriegelbar sind.

14. Kraftfahrzeug-Hintersitz nach einem der Ansprüche 1 bis 13, **dadurch gekennzeichnet**, daß am karosserieseitigen Beschlagteil (30) oder an der Karosserie (2) eine Öse (31; 41) vorgesehen ist, die in der etwa vertikalen Gebrauchsstellung des Rückenlehnenteils (3; 4) eine Öffnung (32; 35) am rückenlehnenseitigen Beschlagteil (33; 34) durchsetzt, so daß ein Schwenkarm (28) bei Verriegelung in die Öse (31; 41) eingreifen kann.

15. Kraftfahrzeug-Hintersitz nach einem der Ansprüche 8 bis 14, **dadurch gekennzeichnet**, daß die Verriegelungsvorrichtung (19; 20) einen beweglich gelagerten und mit einem Ende (24) des Seilzuges (10; 11) lösbar verbundenen Verriegelungshebel (26) aufweist.

16. Kraftfahrzeug-Hintersitz nach Anspruch 15, **dadurch gekennzeichnet**, daß der Verriegelungshebel (26) als ein zweiarmiger Schwenkhebel mit einem zwischen den Schwenkarmen (27, 28) angeordneten Drehgelenk (29) ausgebildet ist.

17. Kraftfahrzeug-Hintersitz nach einem der Ansprüche 8 bis 16, **dadurch gekennzeichnet**, daß die Verriegelungsvorrichtungen (19; 20) durch Betätigung eines am Rückenlehnenteil (3; 4) angeordneten Entriegelungsknopfes (14; 15) gemeinsam entriegelbar sind.

18. Kraftfahrzeug-Hintersitz nach einem der Ansprüche 1 bis 17, **dadurch gekennzeichnet**, daß die Einzelteile der Scharniere (5, 7; 6, 8) und der Verriegelungsvorrichtungen (12, 19; 13, 20) gegenüber der Teilungsebene spiegelbildlich ausgeführt sind.

19. Kraftfahrzeug-Hintersitz nach einem der Ansprüche 1 bis 18, **dadurch gekennzeichnet**, daß der Verriegelungshebel (26), der Schloßriegel (22) und die Wirkverbindung am Rückenlehnenteil (3; 4) angeordnet sind.

20. Kraftfahrzeug-Hintersitz nach einem der Ansprüche 1 bis 18, **dadurch gekennzeichnet**, daß der Verriegelungshebel (26), der Schloßriegel (22) und die Wirkverbindung an der Karosserie angeordnet sind.

## Claims

1. Motor vehicle rear seat with a split backrest, the individual backrest portions (3, 4) of which are coupled to the body by an inner hinge (5; 6) in the region of the dividing plane of the backrest and an outer hinge (7; 8) in the region of the side panel of the motor vehicle, for pivoting about at least one horizontal pivot axis (9) extending transversely to the direction of travel, wherein each hinge (5-8) comprises a fitting on the backrest side and one on the body side, characterised in that the fittings (37, 38; 68, 69) are arranged on the outer hinge (7; 8) by means of a swivel joint (39; 70) arranged stationarily on the body (2) and the fittings (30, 33; 30, 34) are arranged on the inner hinge (5; 6) at a distance behind the pivot axis (9) - referred to the direction of travel - and connected to each other by means of an extensible mechanism (55; 67), so that the fitting on the backrest side (33; 34) moves about the pivot axis (9) on pivoting of the backrest portion (3; 4) about a circular path (40, 43).

2. Motor vehicle rear seat according to claim 1, characterised in that the extensible mechanism (55; 67) is designed as a scissor-like multiple-joint mechanism in which the scissor portion (56) consists of two lever portions (57, 58) of approximately equal length which are connected to each other by a swivel joint (59) arranged in the middle.

3. Motor vehicle rear seat according to claim 1 or 2, characterised in that on the scissor portion (56), on the side facing towards the fitting (30) on the body side, at each of the two ends of the lever portions (57, 58) is arranged a swivel joint (60, 61), of which one swivel joint (61) is provided for connection to the fitting (30) on the body side and the other swivel joint (60) for connection to one end of a swivel lever (62), wherein the swivel lever (62) is with its other end likewise connected to the fitting (30) on the body side by an additional swivel joint (71).

4. Motor vehicle rear seat according to any of claims 1 to 3, characterised in that on the scissor portion (56), on the side facing towards the fitting (33, 34) on the backrest side, at each of the two ends of the lever portions (57, 58) is arranged a swivel joint (63, 64), of which one swivel joint (64) is provided for connection to the fitting (33, 34) on the backrest side and the other swivel joint (63) for connection to one end of an intermediate lever (66), wherein the intermediate lever (66) is with its other end likewise connected to the fitting (33, 34) on the backrest side by an additional swivel joint (65).

5. Motor vehicle rear seat according to any of claims 1 to 4, characterised in that the distances between in each case two swivel joints on both fittings (30, 33; 30, 34), on the lever portions (57, 58), on the swivel lever (62) and on the intermediate lever (66) are the same.

6. Motor vehicle rear seat according to any of claims 1 to 5, characterised in that the axes (47, 48) of at least two swivel joints (61, 71) on the body side of the extensible mechanism (56; 67) and the pivot axis (9) lie in one plane (45).

7. Motor vehicle rear seat according to any of claims 1 to 6, characterised in that the axis (48) of the swivel joint (61) on the body side of the lever portion (58) is arranged in the middle between the pivot axis (9) and the axis (47) of the swivel joint (71) on the body side of the swivel lever (62).

8. Motor vehicle rear seat according to any of claims 1 to 7, characterised in that each inner hinge (5; 6) can be locked by means of a locking device (19; 20) with respect to the mobility of the two fittings (30, 33; 30, 34) relative to each other.

9. Motor vehicle rear seat according to claim 8, characterised in that the locking device (19; 20) can be locked and unlocked together with a locking device (12; 13) engaging the side panel (16; 17) of the vehicle.

10. Motor vehicle rear seat according to claim 8 or 9, characterised in that for joint locking and unlocking between the two locking devices (12, 19; 13, 20), of a backrest portion (3; 4) there is an operative connection.

11. Motor vehicle rear seat according to claim 10, characterised in that the operative connection is designed as an electrical connection.

12. Motor vehicle rear seat according to claim 10, characterised in that the operative connection is designed as a control cable (10; 11).

13. Motor vehicle rear seat according to any of claims 8 to 11, characterised in that the locking devices (19; 20) can be locked automatically by pivoting the backrest portion (3; 4) back into the more or less vertical working position.

14. Motor vehicle rear seat according to any of claims 1 to 13, characterised in that on the fitting (30) on the body side or on the body (2) is provided an eye (31; 41) which in the more or less vertical working position of the backrest portion (3; 4) passes through an opening (32; 35) on the fitting (33; 34) on the backrest side, so that a pivot arm (28) can engage in the eye (31; 41) on locking.

15. Motor vehicle rear seat according to any of claims 8 to 14, characterised in that the locking device (19; 20) comprises a locking lever (26) mounted movably and connected releasably to one end (24) of the control cable (10; 11).

16. Motor vehicle rear seat according to claim 15, characterised in that the locking lever (26) is designed as a two-arm pivot lever with a swivel joint (29) arranged between the pivot arms (27, 28).

17. Motor vehicle rear seat according to any of claims 8 to 16, characterised in that the locking devices (19; 20) can be unlocked together by operation of a release button (14; 15) arranged on the backrest portion (3; 4).

18. Motor vehicle rear seat according to any of claims 1 to 17, characterised in that the component parts of the hinges (5, 7; 6, 8) and of the locking devices (12, 19; 13, 20) are designed in inverse symmetry relative to the dividing plane.

19. Motor vehicle rear seat according to any of claims 1 to 18, characterised in that the locking lever (26), the lock bolt (22) and the operative connection are arranged on the backrest portion (3; 4).

20. Motor vehicle rear seat according to any of claims 1 to 18, characterised in that the locking lever (26), the lock bolt (22) and the operative connection are arranged on the body.

## Revendications

1. Siège arrière de véhicule automobile à dossier en deux parties, dans lequel les différentes parties de dossier (3, 4), à des fins de pivotement autour d'au moins un axe de pivotement (9) horizontal qui s'étend transversalement à la direction de déplacement, sont articulées sur la carrosserie par l'intermédiaire d'une charnière (5; 6) intérieure, dans la région du plan de séparation du dossier, et d'une charnière (7; 8) extérieure, dans la région de la paroi latérale du véhicule, chaque charnière (5-8) présentant une ferrure de dossier et une ferrure de carrosserie, caractérisé par le fait que les ferrures (37, 38; 68, 69) de la charnière (7; 8) extérieure sont reliées au moyen d'une articulation (39; 70) stationnaire par rapport à la carrosserie (2) et les ferrures (30, 33; 30, 34) de la charnière (5; 6) intérieure sont disposées à distance en arrière de l'axe de pivotement (9) - par rapport à la direction de déplacement - et sont reliées entre elles au moyen d'un mécanisme (55; 67) extensible, de sorte que la ferrure (33; 34) de dossier, lors du pivotement de la partie de dossier (3; 4), décrit une trajectoire (40; 43) circulaire autour de l'axe de pivotement (9).

2. Siège arrière de véhicule automobile selon la revendication 1, caractérisé par le fait que le mécanisme (55; 67) extensible est agencé sous la forme d'un mécanisme à parallélogramme à articulations multiples, dans lequel l'élément parallélogramme (56) compend deux bras de levier (57, 58) sensiblement de même longueur qui sont reliés entre eux par l'intermédiaire d'une articulation (59) disposée au milieu.

3. Siège arrière de véhicule automobile selon la revendication 1 ou 2, caractérisé par le fait que l'élément (56) de parallélogramme, du côté tourné vers la ferrure de carrosserie (30), comporte à chacune des extrémités des bras de levier (57, 58) une articulation (60, 61), l'une (61) des articulations étant prévue pour la liaison avec la ferrure de carrosserie (30) et l'autre articulation (60) pour la liaison avec une extrémité d'un levier pivotant (62), le levier pivotant (62) étant relié par son autre extrémité, lui aussi, à la ferrure de carrosserie (30) par l'intermédiaire d'une articulation (71) supplémentaire.

4. Siège arrière de véhicule automobile selon l'une des revendications 1 à 3, caractérisé par le fait que l'élément parallélogramme (56), du côté tourné vers la ferrure de dossier (33, 34), comporte à chacune des extrémités des bras de levier (57, 58) une articulation (63, 64), l'une (64) des articulations étant prévue pour la liaison avec la ferrure de dossier (33, 34) et l'autre articulation (63) pour la liaison avec une extrémité d'un levier intermédiaire (66), le levier intermédiaire (66) étant relié par son autre extrémité, lui aussi, à la ferrure de dossier (33, 34), par l'intermédiaire d'une articulation (65) supplémentaire.

5. Siège arrière de véhicule automobile selon l'une des revendications 1 à 4, caractérisé par le fait que les distances entre chaque fois deux articulations sur les deux ferrures (30, 33; 30, 34), sur les bras de levier (57, 58), sur le levier pivotant (62) et sur le levier intermédiaire (66) sont égales.

6. Siège arrière de véhicule automobile selon l'une des revendications 1 à 5, caractérisé par le fait que les axes (47, 48) d'au moins deux articulations (61, 71) côté carrosserie du mécanisme (56; 67) extensible et l'axe de pivotement (9) sont situés dans un plan (45).

7. Siège arrière de véhicule automobile selon l'une des revendications 1 à 6, caractérisé par le fait que l'axe (48) de l'articulation (61) côté carrosserie du bras de levier (58) est disposé au milieu entre l'axe de pivotement (9) et l'axe (47) de l'articulation (71) côté carrosserie du levier pivotant (62).

8. Siège arrière de véhicule automobile selon l'une des revendications 1 à 7, caractérisé par le fait que chaque charnière (5, 6) intérieure, en ce qui concerne la mobilité des deux ferrures (30, 33; 30, 34) l'une par rapport à l'autre, peut être verrouillée au moyen d'un dispositif de verrouillage (19; 20).

9. Siège arrière de véhicule automobile selon la revendication 8, caractérisé par le fait que le dispositif de verrouillage (19; 20) peut être verrouillé et déverrouillé en même temps qu'un dispositif de verrouillage (12, 13) qui agit sur la paroi latérale (16, 17) du véhicule.

10. Siège arrière de véhicule automobile selon la revendication 8 ou 9, caractérisé par le fait qu'à des fins de verrouillage et de déverrouillage simultané, une liaison active (3, 4) existe entre les deux dispositifs de verrouillage (12, 19; 13, 20) d'une partie de dossier (3; 4).

11. Siège arrière de véhicule automobile selon la revendication 10, caractérisé par le fait que la liaison active est une liaison électrique.

12. Siège arrière de véhicule automobile selon la revendication 10, caractérisé par le fait que la liaison active est un câble de Bowden (10, 11).

13. Siège arrière de véhicule automobile selon l'une des revendications 8 à 11, caractérisé par le fait que les dispositifs de verrouillage (19, 20) se verrouillent automatiquement lorsqu'on ramène les parties de dossier (3, 4) dans la position d'utilisation sensiblement verticale.

14. Siège arrière de véhicule automobile selon l'une des revendications 1 à 13, caractérisé par le fait qu'il est prévu sur la ferrure de carrosserie (30) ou sur la carrosserie (2) un anneau (31, 41) qui, dans la position d'utilisation sensiblement verticale de la partie de dossier (3; 4), pénètre dans une ouverture (32, 35) de la ferrure de dossier (33, 34) de telle sorte qu'un bras pivotant (28) puisse s'engager dans l'anneau (31; 41) lors du verrouillage.

15. Siège arrière de véhicule automobile selon l'une des revendications 8 à 14, caractérisé par le fait que le dispositif de verrouillage (19; 20) comporte un levier de verrouillage (26) qui est monté mobile et est relié de manière séparable à une extrémité (24) du câble (10; 11).

16. Siège arrière de véhicule automobile selon la revendication 15, caractérisé par le fait que le levier de verrouillage (26) est agencé sous la forme d'un levier pivotant à deux bras avec une articulation (29) disposée entre les deux bras (27, 28).

17. Siège arrière de véhicule automobile selon l'une des revendications 8 à 16, caractérisé par le fait que les dispositifs de verrouillage (19, 20) peuvent être déverrouillés simultanément en actionnant un bouton (14; 15) de déverrouillage disposé dans la partie de dossier (3; 4).

18. Siège arrière de véhicule automobile selon l'une des revendications 1 à 17, caractérisé par le fait que les différentes parties des charnières (5, 7: 6, 8) et des dispositifs de verrouillage (12, 19; 13, 20) sont symétriques par rapport au plan de séparation.

19. Siège arrière de véhicule automobile selon l'une des revendications 1 à 18, caractérisé par le fait que le levier de verrouillage (26), le verrou (22) et la liaison active sont disposés sur la partie de dossier (3; 4).

20. Siège arrière de véhicule automobile selon l'une des revendications 1 à 18, caractérisé par le fait que le levier de verrouillage (26), le verrou (22) et la liaison active sont disposés sur la carrosserie.
